# DEMANDE DE BREVET EUROPEEN

(11) **EP 1 278 285 A1**
(43) Date de publication de la demande: **22.01.2003**
(21) Numéro de dépôt: 02356126.9
(22) Date de dépôt: 04.07.2002
(51) Int. Cl.: H02J 7/02

(54) **Dispositif de commande pour chargeur de batterie d'accumulateurs**

(30) Priorité: 19.07.2001 FR 0109685
(71) Demandeur: Chassaing, Jean-Pierre, 75020 Paris (FR)
(72) Inventeur: Chassaing, Jean-Pierre, 75020 Paris (FR)
(74) Mandataire: Bratel, Gérard

(57) **Abrégé**

Le dispositif permet de limiter le temps de charge d'une batterie (16), pour éviter sa détérioration. Ce dispositif comprend :
- un programmateur horaire (22) permettant la sélection d'un temps de charge ;
- un bouton-poussoir (27) de mise en route du chargeur ;
- un relais (33) activé par l'appui sur le bouton-poussoir (27), avec un contact (35) d'auto-alimentation et un circuit (34) d'auto-alimentation, un contact (25) d'alimentation du programmateur (22), et des contacts (36, 37) d'alimentation des circuits de puissance (2 à 15) du chargeur ;
- une sortie (26) du programmateur (22) prévue pour désactiver le relais (33) à la fin du temps de charge sélectionné.

## Description

La présente invention concerne le domaine des chargeurs de batterie d'accumulateurs, tels que les chargeurs utilisables par des automobilistes pour recharger eux-mêmes une batterie déchargée, qui ne permet plus le démarrage du véhicule automobile. Plus particulièrement, cette invention se rapporte à un dispositif de commande pour chargeur de batterie d'accumulateurs, avec limitation du temps de charge.

Dans le domaine des dispositifs et appareils pour la charge de batteries d'accumulateurs, on connaît, d'une part, des appareillages industriels plus ou moins complexes, qui servent à maintenir en charge permanente des batteries d'accumulateurs utilisables, notamment, comme alimentation électrique de secours. La présente invention ne s'intéresse pas à ce genre d'appareillages.

D'autre part, on connaît des chargeurs de batteries compacts, légers et économiques, utilisables par les particuliers, tels que les automobilistes, pour recharger en cas de besoin une batterie déchargée. C'est à ce genre d'appareils que s'intéresse la présente invention.

Dans tous les cas, il convient de contrôler convenablement le processus de charge, pour recharger suffisamment les batteries afin de les rendre aptes à remplir leur fonction, mais sans recharger excessivement et inutilement ces batteries, afin de ne pas les détériorer, avec le risque de les rendre définitivement hors d'usage.

Dans le domaine des chargeurs de batterie industriels, on utilise déjà des dispositifs complexes de contrôle de charge et de protection, qui peuvent notamment contrôler les temps de charge en les divisant en plusieurs durées successives, contrôler aussi l'intensité du courant de charge en fonction du temps, et tenir compte aussi de la tension aux bornes de la batterie en cours de charge. Il s'agit donc de dispositifs complexes, devant réaliser des mesures diverses, et comportant nécessairement une commande électromécanique ou électronique sophistiquée, par exemple avec des programmateurs à cames et des relais multiples. De tels dispositifs peuvent, naturellement, assurer un contrôle précis et adapté du processus de charge, avec un haut degré de sécurité. Toutefois, en raison de leur complexité, ils restent lourds, encombrants et coûteux, ce qui les rend difficilement applicables, de façon économique, sur des petits chargeurs de batterie. A titre d'exemples de ces dispositifs, on peut citer les brevets français FR 1530629, FR 2344944 et FR 2345136, ainsi que les brevets US 3660748, US 4207513 et US 5952813.

A l'inverse, les actuels petits chargeurs de batterie ne comportent pas de protection adaptée et suffisante, de sorte que leur utilisation nécessite une grande vigilance de la part de l'utilisateur, et comporte le risque d'une détérioration de la batterie en cours de charge. Certes, les constructeurs de certains chargeurs de batterie, vendus dans le commerce, indiquent des durées de charge à respecter, en fonction des types d'accumulateurs, mais ces temps de charge dépendent des intensités de charge prévues par le constructeur, et il n'existe là aucune protection qui limiterait impérativement les temps de charge.

La présente invention vise à remédier à ces inconvénients, en permettant la réalisation de petits chargeurs de batterie qui, tout en restant simples et économiques, possèdent une protection réelle, adaptée et suffisante, évitant la détérioration de la batterie en cours de charge.

A cet effet, l'invention a essentiellement pour objet un dispositif de commande pour chargeur de batterie d'accumulateurs, avec limitation du temps de charge, ce dispositif comprenant essentiellement, en combinaison :
- un programmateur horaire permettant la sélection d'un temps de charge,
- un bouton-poussoir de mise en route du chargeur de batterie,
- un relais activé par l'appui sur le bouton-poussoir, avec un contact d'auto-alimentation et un circuit d'auto-alimentation, un contact d'alimentation du programmateur, et au moins un contact d'alimentation des circuits de puissance du chargeur de batterie,
- une sortie du programmateur prévue pour désactiver le relais, à la fin du temps de charge sélectionné.

Dans une forme de réalisation préférée de l'invention, la sortie du programmateur est raccordée au circuit d'auto-alimentation du relais, cette sortie délivrant la tension du réseau alternatif d'alimentation électrique, durant tout le temps de charge sélectionné, et revenant à une valeur "zéro" à la fin de ce temps de charge.

Ainsi, l'invention propose un dispositif de commande pour chargeur de batterie, qui permet de limiter le temps de charge à une durée sélectionnée, par exemple une durée de 10 heures, durée qui d'une part est suffisante pour recharger une batterie déchargée, et qui d'autre part ne comporte aucun risque de détérioration ou destruction de cette batterie. Le dispositif proposé reste simple et économique, en ce sens qu'il nécessite seulement un programmateur d'un type disponible dans le commerce, et un relais électrique avec ses différents contacts, aucun organe de mesure ou contrôle de l'intensité ou de la tension de charge n'intervenant ici pour le contrôle du temps de charge. A la fin du temps de charge sélectionné, le programmateur coupe l'alimentation du relais, de sorte que le ou les contacts de ce relais coupent eux-mêmes l'alimentation des circuits de puissance du chargeur, c'est-à-dire l'alimentation de son transformateur et de son redresseur, eux-mêmes réalisables de façon traditionnelle.

Bien que la probabilité d'une coupure du réseau d'alimentation électrique, au cours du temps de charge, soit généralement faible, il convient d'éviter que, dans l'éventualité d'une telle coupure, et après rétablissement de la tension électrique du réseau, le temps total de charge arrive à excéder le temps initialement sélectionné (ce qui se produirait si, au moment du rétablissement du courant, le programmateur repartait "à zéro"). La présente invention évite aussi ce risque, de manière à rendre la charge particulièrement sûre.

A cet effet, le dispositif de contrôle pour chargeur de batterie, objet de l'invention, est avantageusement prévu de telle sorte que, en cas de coupure du réseau d'alimentation électrique, sur lequel est branché le chargeur de batterie :
- la coupure met le relais au repos et arrête aussi le programmateur ;
- après rétablissement de la tension électrique du réseau d'alimentation, une nouvelle pression sur le bouton-poussoir est nécessaire pour réactiver le relais ;
- le programmateur, étant lui aussi remis sous tension par le contact correspondant du relais, recommence à compter le temps, à partir du temps intermédiaire où il s'est arrêté, et pour le temps restant jusqu'à la fin du temps total de charge sélectionné.

Ainsi, en cas de coupure de courant, le chargeur de batterie doit être volontairement remis en marche, et le programmateur, ne se remettant pas "à zéro", reprendra le comptage au point où il s'est arrêté, et il s'arrêtera finalement après un temps total n'excédant pas le temps initialement sélectionné, ce qui offre toute la sécurité souhaitable. Ce mode de fonctionnement, étant inhérent à la structure des circuits électriques du dispositif, et à la constitution du programmateur, n'implique aucune complication et aucun renchérissement du dispositif.

L'invention sera mieux comprise à l'aide de la description qui suit, en référence au dessin schématique annexé représentant, à titre d'exemple, une forme d'exécution de ce dispositif de commande pour chargeur de batterie d'accumulateurs :
Figure 1 représente, sous forme de schéma électrique, un chargeur de batterie équipé du dispositif de commande objet de la présente invention ;
Figures 2 et 3 sont des schémas électriques similaires à la figure 1, et illustrant diverses étapes de fonctionnement du dispositif selon l'invention.

Comme le montrent les figures, le chargeur de batterie comprend, de façon connue en soi, un transformateur abaisseur de tension 2 dont l'enroulement primaire 3 est monté entre deux bornes 4 et 5, prévues pour être alimentées en courant alternatif, et dont l'enroulement secondaire 6 est relié aux deux bornes d'entrée 7 et 8 d'un pont redresseur 9 à diodes 10. Les deux bornes de sortie 11 et 12 du pont redresseur 9 alimentent, en courant redressé, un circuit de sortie 13 avec résistance 14 et condensateur de lissage 15, la batterie d'accumulateurs à charger 16 étant branchée sur ce circuit de sortie 13, en parallèle avec le condensateur 15, entre deux bornes 17 et 18.

L'alimentation en courant alternatif de l'ensemble du chargeur de batterie, y compris son dispositif de commande, est réalisée entre un conducteur de phase 19 et un conducteur neutre 20, une terre 21 étant aussi prévue.

Le dispositif de commande comprend un programmateur électronique 22, avec une partie "entrée" 23 et une partie "sortie" 24, reliées au neutre 20 et à la terre 21. L'entrée 23 du programmateur 22 est aussi reliée au conducteur de phase 19, par l'intermédiaire d'un premier contact de relais 25. La partie "sortie" 24 du programmateur 22 comporte une borne de sortie 26 en courant alternatif.

Le dispositif de commande comprend aussi un bouton-poussoir 27, à double contact 28, 29 normalement ouvert, relié par une branche de circuit 30 au conducteur de phase 19. Le bouton-poussoir 27 est relié, d'une part, à une branche de circuit 31 sur laquelle est intercalé le bobinage 32 d'un relais électromécanique 33, cette branche de circuit 31 aboutissant au neutre 20. Ce bouton-poussoir 27 est relié aussi à un circuit 34 d'auto-alimentation du relais 33, avec un contact 35 d'auto-alimentation.

Le conducteur de phase 19 est relié à une borne 5 du primaire 3 du transformateur 2 par l'intermédiaire d'un contact de relais 36. Un dernier contact de relais 37 est intercalé sur une branche de circuit 38, reliant l'autre borne 4 du primaire 3 du transformateur 2 au neutre 20. Les quatre contacts 25, 35, 36 et 37 sont tous commandés, de façon simultanée, par le même relais 33.

Les deux bornes 4 et 5 du primaire 3 du transformateur 2 sont aussi reliées à une ampoule électrique 39, qui sert de voyant indicateur de charge.

Enfin, en parallèle avec l'ampoule 39, donc toujours entre les deux bornes 4 et 5 du primaire 3 du transformateur 2, peut être montée une prise 40, avec fiche de terre, permettant le branchement d'un appareil électrique quelconque, ou la recharge d'un appareil électrique à accumulateurs, tel qu'une lampe torche (non représentée).

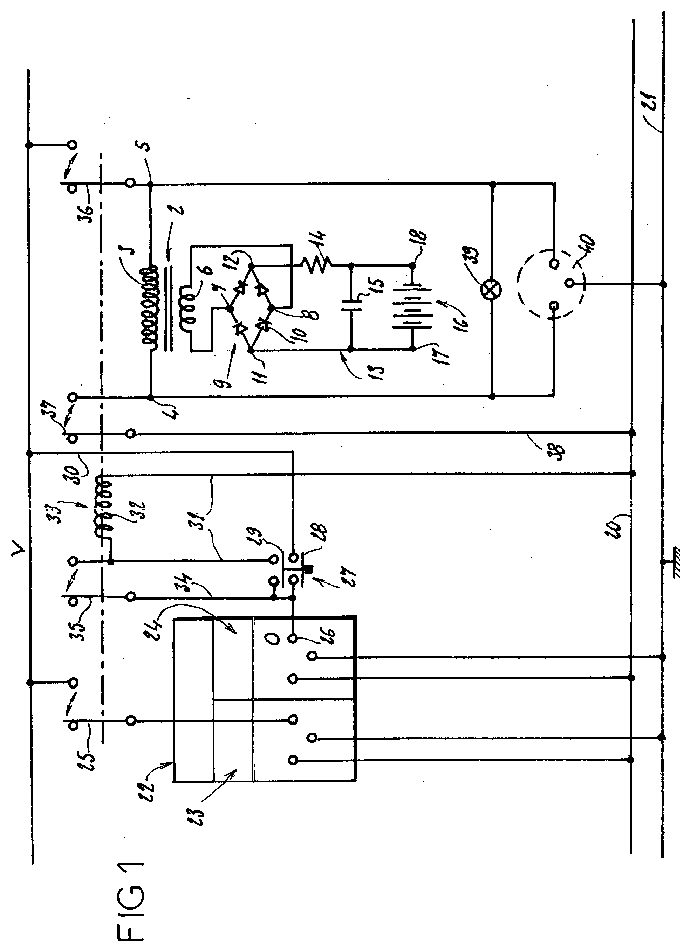

La figure 1 montre le chargeur de batterie à l'arrêt, avant utilisation : le bouton-poussoir 27 se trouve au repos, ses contacts 28, 29 étant ouverts ; le relais 33 est désactivé, son bobinage 32 n'étant pas sous tension, de sorte que tous ses contacts 25, 35, 36, 37 sont ouverts ; en particulier, le contact 25 étant ouvert, le programmateur 22 n'est pas sous tension, et se trouve mis "à zéro". Ainsi, le programmateur 22 ne "tourne" pas, et sa borne de sortie 26 n'a pas de tension.

Pour la mise en marche du chargeur de batterie, celui-ci est relié à une source de courant alternatif, de manière à disposer d'une tension alternative V (par exemple de 220 volts) entre le conducteur de phase 19 et le neutre 20. Le programmateur 22 est préalablement réglé sur une durée T choisie, correspondant au temps de charge désiré, la sélection de ce temps de charge pouvant s'effectuer par enfoncement de leviers (chaque levier correspondant, par exemple, à une durée élémentaire d'un quart d'heure). Ainsi, le programmateur 22 est réglé, par exemple, sur un temps de charge T de 10 heures.

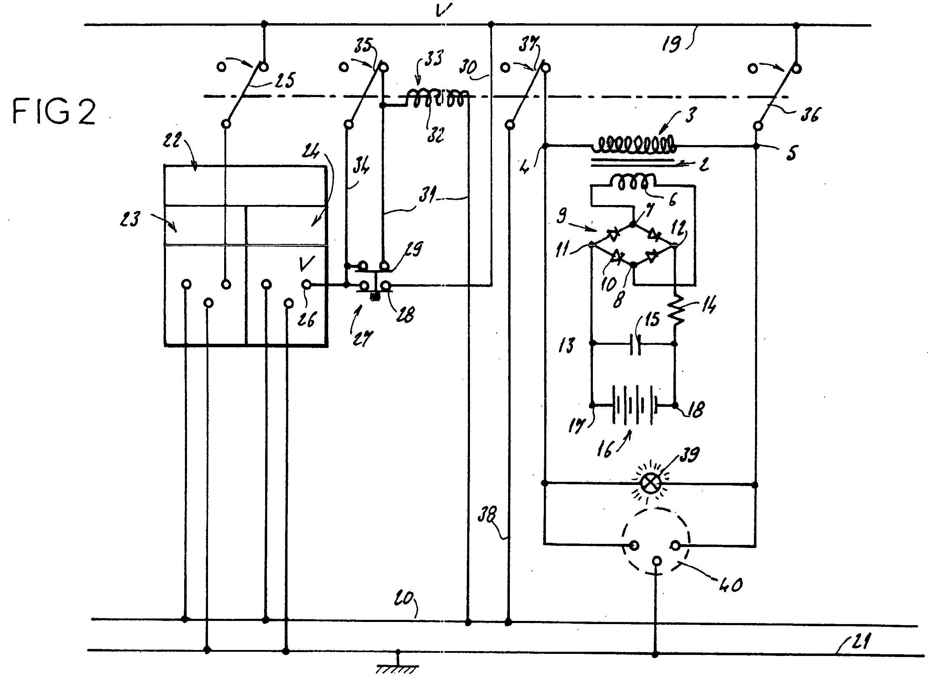

Pour lancer le processus de charge, il suffit alors à l'utilisateur d'enfoncer le bouton-poussoir 27, de telle sorte que ses contacts 28 et 29 se ferment, comme montré sur la figure 2, et permettent ainsi le passage du courant dans les branches de circuit 30 et 31. Le bobinage 32 du relais 33 est alors alimenté, excitant ce relais 33 dont les contacts 25, 35, 36, 37 se ferment instantanément (la position de fermeture de ces contacts étant montrée sur la figure 2).

En particulier, la fermeture du contact 25 met le programmateur 22 sous tension, celui-ci se met alors à "tourner", et sa borne de sortie 26 délivre la tension alternative V.

La fermeture simultanée des contacts 36 et 37 du relais 33 permet le passage du courant alternatif, sous la tension V, dans le primaire 3 du transformateur 2, de sorte que le processus de charge de la batterie 16 débute, la batterie 16 étant chargée sous une tension continue appropriée. L'ampoule 39, simultanément mise sous tension, s'éclaire et indique que la charge s'effectue.

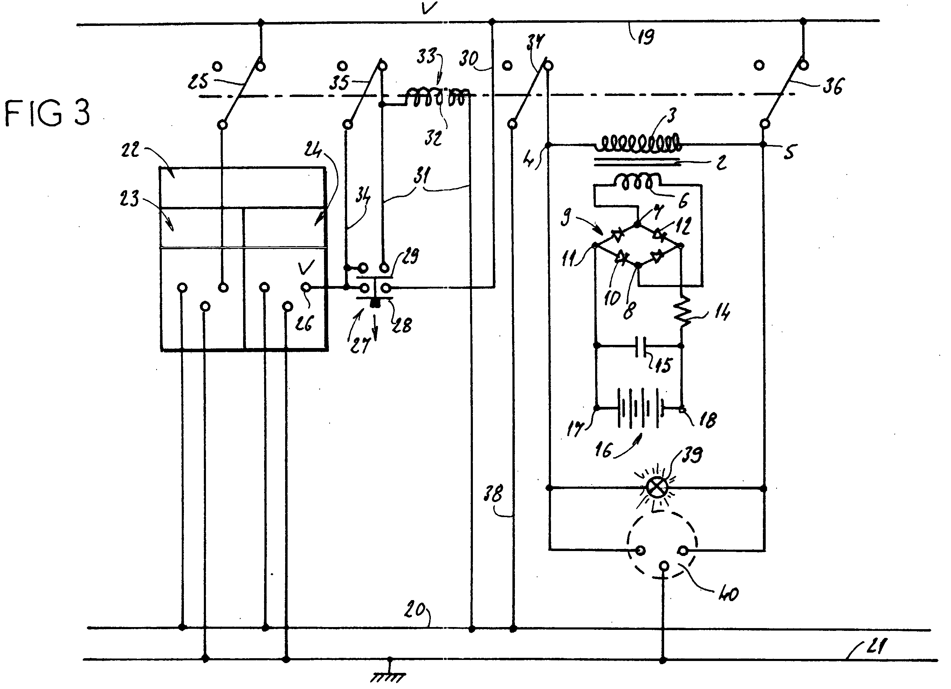

Lorsque le bouton-poussoir 27 est relâché, il repasse en position de repos - voir figure 3. Toutefois, le contact 35 qui s'était précédemment fermé assure l'auto-alimentation du relais 33, dont le bobinage 32 continue d'être alimenté sous la tension alternative V, par la borne de sortie 26 du programmateur 22 et le circuit 34.

La charge de la batterie 16 se poursuit ainsi, aussi longtemps que le programmateur 22 délivre la tension V sur sa borne de sortie 26. Si aucun incident ne se produit, cette charge s'effectue durant tout le temps T, par exemple de dix heures, sélectionné initialement sur le programmateur 22. Lorsque ce programmateur 22 arrive à la fin du temps T sélectionné, la tension V disparaît automatiquement sur sa borne de sortie 26, qui revient alors à un tension nulle. Le bobinage 32 du relais 33 n'est plus sous tension, et ce relais 33 est ainsi désactivé, tous ses contacts 25, 35, 36, 37 s'ouvrant. En particulier l'ouverture des contacts 36, 37 interrompt toute alimentation du transformateur 2, de sorte que le processus de charge de la batterie 16 s'arrête. Simultanément, l'ampoule 39 s'éteint, et indique que la charge de la batterie 16 est terminée.

Si au bout d'un certain temps partiel de charge, par exemple après une heure, il survient une panne de réseau électrique d'alimentation, l'ensemble des circuits du chargeur est mis hors tension. D'une part, la batterie 16 n'est plus chargée et, d'autre part, le programmateur 22 cesse de "tourner" et reste donc à la position (par exemple : une heure) où il se trouvait à l'instant de la coupure d'alimentation. L'ampoule 39 est aussi éteinte, et elle signale ainsi l'interruption de la charge. Dans cette situation, le relais 33 a aussi été désactivé, et ses contacts se sont ouverts (retour à la position de la figure 1).

A l'instant où la tension alternative est rétablie sur le réseau d'alimentation, donc sur le conducteur de phase 19, la charge de la batterie 16 ne reprend pas automatiquement, le programmateur 22 restant arrêté et ne délivrant aucune tension sur la borne de sortie 26. Il convient de presser le bouton-poussoir 27, pour réactiver le relais 33 et remettre ainsi le programmateur 22 sous tension. Ce programmateur 22 se remet alors à "tourner", à partir de sa position d'arrêt (par exemple : une heure), en délivrant à nouveau sur sa borne de sortie 26 la tension V. Le chargeur reprend donc la charge de la batterie 16, pour le temps restant (dans l'exemple considéré : neuf heures), l'arrêt final de la charge s'opérant de la manière déjà décrite plus haut.

Ainsi, l'apparition d'une coupure du réseau d'alimentation, au cours du temps de charge sélectionné, ne risque pas de fausser le temps total de charge de la batterie 16.

Si le bouton-poussoir 27 est pressé après la fin du temps de charge T programmé, le relais 32 est excité pendant le temps de pression sur ce bouton-poussoir 27, mais la borne de sortie 26 du programmateur reste à une tension nulle, si bien que le relais 33 ne peut s'auto-alimenter. Dès que le bouton-poussoir 27 est relâché, tous les contacts de ce relais s'ouvrent, et le processus de charge de la batterie 16 ne peut reprendre. Ainsi, il est impossible de prolonger la charge au-delà du temps T sélectionné. Dans cette situation, l'ampoule 39 s'éteint aussi, après relâchement du bouton-poussoir 27, ce qui permet à l'utilisateur de constater que la charge ne se produit pas.

Ainsi, dans toutes les hypothèses, le temps de charge T sélectionné ne peut être dépassé.

La prise 40 permet de recharger certaines lampes torches rechargeables du commerce, qui sont prévues pour être chargées pendant une durée prédéterminée (par exemple de 24 heures), mais qui ne comportent aucun limiteur de durée de charge intégré dans leur boîtier. Ainsi, le dispositif de commande pour chargeur de batterie, objet de l'invention, peut être mis à profit pour sélectionner et limiter aussi le temps de charge de telles lampes torches, ou d'autres appareils électriques rechargeables.

## Revendications

1. Dispositif de commande pour chargeur de batterie d'accumulateurs, avec limitation du temps de charge, **caractérisé en ce qu'**il comprend, en combinaison :
- un programmateur horaire (22) permettant la sélection d'un temps de charge (T),
- un bouton-poussoir (27) de mise en route du chargeur de batterie,
- un relais (33) activé par l'appui sur le bouton-poussoir (27), avec un contact (35) d'auto-alimentation et un circuit (34) d'auto-alimentation, un contact (25) d'alimentation du programmateur (22), et au moins un contact (36, 37) d'alimentation des circuits de puissance (2 à 15) du chargeur de batterie,
- une sortie (26) du programmateur (22) prévue pour désactiver le relais (33), à la fin du temps de charge (T) sélectionné.

2. Dispositif de commande pour chargeur de batterie, selon la revendication 1, **caractérisé en ce que** la sortie (26) du programmateur (22) est raccordée au circuit (34) d'auto-alimentation du relais (33), cette sortie (26) délivrant la tension (V) du réseau alternatif d'alimentation électrique durant tout le temps de charge (T) sélectionné, et revenant à une valeur "zéro" à la fin de ce temps de charge (T).

3. Dispositif de commande pour chargeur de batterie, selon la revendication 2, **caractérisé en ce qu'**il est prévu de telle sorte que, en cas de coupure du réseau d'alimentation électrique, sur lequel est branché le chargeur de batterie :
- la coupure met le relais (33) au repos et arrête aussi le programmateur (22) ;
- après rétablissement de la tension électrique (V) du réseau d'alimentation, une nouvelle pression sur le bouton-poussoir (27) est nécessaire pour réactiver le relais (33);
- le programmateur (22), étant lui aussi remis sous tension par le contact correspondant (25) du relais (33), recommence à compter le temps, à partir du temps intermédiaire où il s'est arrêté, et pour le temps restant jusqu'à la fin du temps total de charge (T) sélectionné.

4. Dispositif de commande pour chargeur de batterie selon l'une quelconque des revendications 1 à 3, **caractérisé en ce que**, entre les bornes du primaire (3) du transformateur (2) du chargeur de batterie, commandé par ce dispositif, est montée une prise (40), permettant la recharge d'un appareil électrique à accumulateurs, tel qu'une lampe torche, en sélectionnant et limitant aussi le temps de charge (T) de cet appareil électrique.
